# EUROPEAN PATENT APPLICATION

(11) **EP 4 425 381 A1**
(43) Date of publication of application: **04.09.2024**
(21) Application number: 22886384.1
(22) Date of filing: 24.06.2022
(51) Int. Cl.: G06N 3/067

(54) **NEURAL NETWORK DEVICE, DETECTION METHOD, AND PROGRAM**

(30) Priority: 25.10.2021 JP 2021174087
(71) Applicant: Sony Group Corporation, 108-0075 Tokyo (JP)
(72) Inventor: TAKATSUKA, Susumu, Tokyo 108-0075 (JP); ENDO, Kenta, Tokyo 108-0075 (JP)
(74) Representative: MFG Patentanwälte Meyer-Wildhagen Meggle-Freund Gerhard PartG mbB
(86) International application number: PCT/JP2022/025315
(87) International publication number: WO 2023/074047

(57) **Abstract**

A neural network device includes one or a plurality of optical diffractive deep neural networks each optimized for light of a predetermined wavelength region, a light guide unit that guides light of an optimized wavelength region to the optical diffractive deep neural network, a light receiving portion that receives light output from the optical diffractive deep neural network, and a control unit that detects a target object on the basis of a signal corresponding to the light received by the light receiving portion.

## Description

### TECHNICAL FIELD

The present technology relates to a neural network device, a detection method, and a program, and particularly relates to a technology using an optical diffractive deep neural network.

### BACKGROUND ART

Conventionally, there has been proposed a neural network device that constructs a neural network including a plurality of intermediate layers between an input layer and an output layer, learns parameters using this neural network, and outputs a score to input information (refer to, for example, Patent Document 1).

### CITATION LIST

### PATENT DOCUMENT

Patent Document 1: Japanese Patent Application Laid-Open No. 2021-162917

### SUMMARY OF THE INVENTION

### PROBLEMS TO BE SOLVED BY THE INVENTION

Meanwhile, there is proposed an optical diffractive deep neural network formed by a translucent thin flat glass layer in which a large number of heterogeneous phases such as sub-wavelength-sized bubbles and graphene are arranged. In the optical diffractive deep neural network, light enters from an incident surface, and the input light is repeatedly reflected, diffracted, and absorbed by heterogeneous phases mixed inside before being emitted from the emission surface. Here, in the optical diffractive deep neural network, there is generated a region on the emission surface where certain light is concentrated, in accordance with the incident light, that is, light from an object (reflected light, for example). Thus, the optical diffractive deep neural network is able to detect a predetermined target object on the basis of the intensity distribution of light emitted from the emission surface.

However, in a case where light of different wavelength regions is input in the optical diffractive deep neural network, crosstalk due to light of different wavelength regions may occur, thereby deteriorating the accuracy of target object detection.

Therefore, an object of the present technology is to improve the accuracy of target object detection.

### SOLUTIONS TO PROBLEMS

A neural network device according to the present technology includes one or a plurality of optical diffractive deep neural networks each optimized for light of a predetermined wavelength region, a light guide unit that guides light of an optimized wavelength to the optical diffractive deep neural network, a light receiving portion that receives light output from the optical diffractive deep neural network, and a control unit that detects a target object on the basis of a signal corresponding to the light received by the light receiving portion.

Therefore, light of a wavelength region optimized for the optical diffractive deep neural network is made to enter the optical diffractive deep neural network. Thus, it is possible to reduce crosstalk with light of other wavelength regions.

### BRIEF DESCRIPTION OF DRAWINGS

Fig. 1 is a diagram for explaining a configuration of a neural network device as a first embodiment.
Fig. 2 is a diagram for explaining an optical circuit in an ODDNN.
Fig. 3 is a diagram for explaining light emitted from the ODDNN.
Fig. 4 is an enlarged view of a spectroscopic portion, an ODDNN, and a light receiving portion.
Fig. 5 is a diagram for explaining a specific example of target object detection.
Fig. 6 is a flowchart showing a procedure of target object detection processing.
Fig. 7 is a diagram for explaining a configuration of a neural network device as a second embodiment.
Fig. 8 is a diagram for explaining a specific example of target object detection.
Fig. 9 is a flowchart showing a procedure of target object detection processing.
Fig. 10 is a diagram for explaining an imaging device.
Fig. 11 is a flowchart showing a procedure of imaging processing.
Fig. 12 is a diagram for explaining an imaging device.
Fig. 13 is a flowchart showing a procedure of imaging processing.
Fig. 14 is a diagram for explaining a spectroscopic portion according to a modification.
Fig. 15 is a diagram for explaining a configuration of an imaging detecting portion.
Fig. 16 is a diagram for explaining a configuration of a neural network device according to a modification.

### MODE FOR CARRYING OUT THE INVENTION

Hereinafter, embodiments will be described in the following order.
<1. First embodiment>
<2. Second embodiment>
<3. Application examples>
<4. Other configuration examples of neural network device>
<5. Summary of embodiments>
<6. Present technology>

### <1. First embodiment>

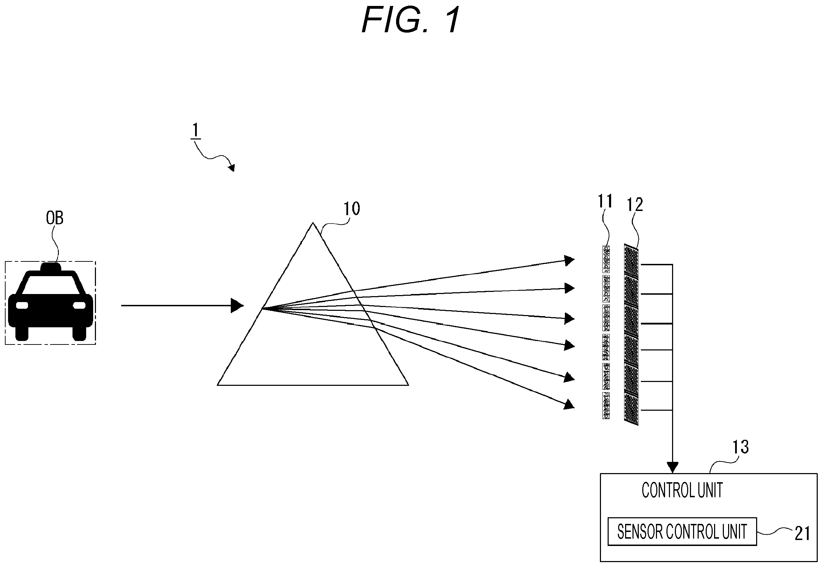

Fig. 1 is a diagram for explaining a configuration of a neural network device 1 as a first embodiment. The neural network device 1 is a device that detects a target object using one or a plurality of optical diffractive deep neural networks (hereinafter, referred to as ODDNN) each optimized for light of a different wavelength region.

As illustrated in Fig. 1, the neural network device 1 includes a spectroscopic portion 10, an ODDNN 11, a light receiving portion 12, and a control unit 13.

In the neural network device 1, light from the outside enters the spectroscopic portion 10. The spectroscopic portion 10 is a device that disperses incident light (light reflected by an object OB, here), and is a prism in the first embodiment. The spectroscopic portion 10 disperses the incident light using a difference in refractive index for each wavelength. The dispersed light is incident on the ODDNN 11.

The ODDNN 11 is formed by a translucent thin flat glass layer in which a large number of heterogeneous phases such as sub-wavelength-sized bubbles and graphene are arranged. Note that, although Fig. 1 illustrates a case where the ODDNN 11 is formed by one flat glass layer, the ODDNN 11 may be formed by a plurality of flat glass layers spaced therebetween at predetermined intervals.

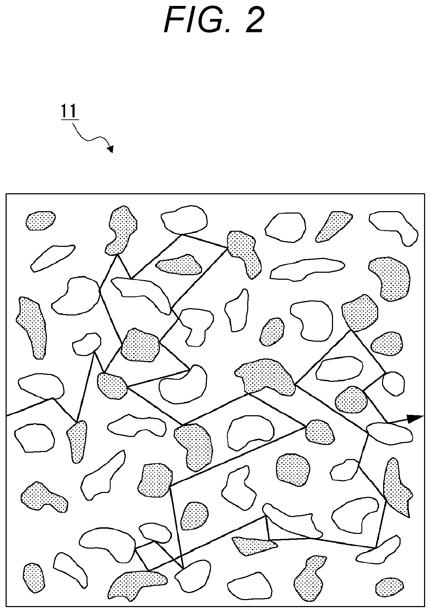

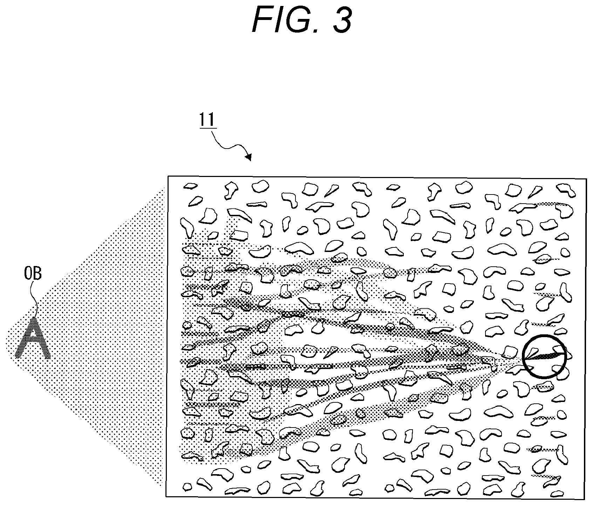

Fig. 2 is a diagram for explaining an optical circuit in the ODDNN 11. Fig. 3 is a diagram for explaining light emitted from the ODDNN 11. Fig. 2 illustrates an example in which light enters from an incident surface on the left side in the drawing and is emitted from an emission surface on the right side in the drawing.

As illustrated in Fig. 2, in the ODDNN 11, light enters from the incident surface, and the incident light is repeatedly reflected, diffracted, and absorbed by heterogeneous phases mixed inside before being emitted from the emission surface. Here, in the ODDNN 11, there is generated a region on the emission surface where certain light is concentrated, in accordance with the incident light.

For example, as illustrated in Fig. 3, when light of the number "A" as an object OB enters, the light is most concentrated in a region surrounded by a black circle in the drawing on the emission surface of the ODDNN 11.

In this manner, in the ODDNN 11, the region where light is concentrated on the emission surface side is different for each incident light, that is, light reflected by the object OB to be incident (also simply referred to as light of the object OB). In other words, in the ODDNN 11, the intensity distribution of the light emitted from the emission surface is different for each incident light of the object OB.

Then, in the ODDNN 11, light corresponding to one or a plurality of objects OB is made to enter so as to preliminarily learn the light intensity distribution on the emission surface. Therefore, when light of an unknown object OB has entered, the neural network device 1 is able to detect the object OB as a target object on the basis of the intensity distribution of the light emitted from the emission surface of the ODDNN 11 and the learning result.

In this manner, the ODDNN 11 functions as a neural network, but does not require then a power supply, an electronic circuit, a sensor, or the like. This enables an energy-saving and low load neural network to be constructed.

Furthermore, the ODDNN 11 is able to operate at a level of light velocity because the incident light is emitted after repeating reflection, diffraction, and absorption.

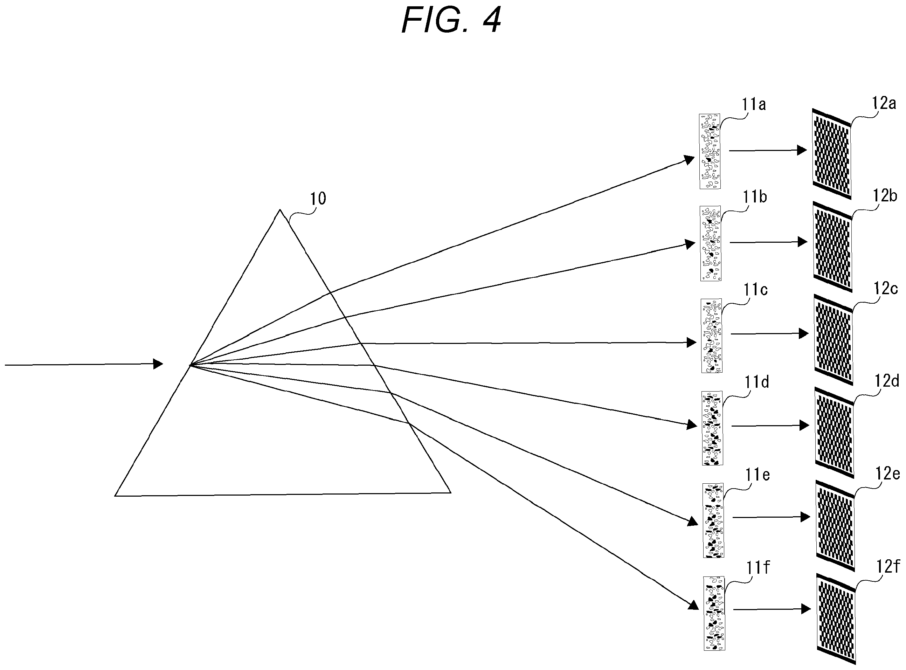

Fig. 4 is an enlarged view of the spectroscopic portion 10, the ODDNN 11, and the light receiving portion 12. Here, in a case where light of different wavelength regions has entered one ODDNN 11, crosstalk due to light of different wavelength regions may occur in the ODDNN 11, thereby deteriorating the accuracy of target object detection.

Therefore, in the first embodiment, the ODDNN 11 includes a plurality of (six in Fig. 1 and Fig. 4) ODDNNs. Specifically, light of different wavelength regions (light of first to sixth wavelength regions, for example) dispersed by the spectroscopic portion 10 enters a plurality of ODDNNs 11a to 11f, respectively.

Here, the plurality of ODDNNs 11a to 11f is each selected to be optimal for the light of a wavelength region to be incident thereon. Here, the "to be optimal" indicates adjustment of the arrangement of heterogeneous phases in the flat glass layer, the number of flat glass layers, and the interval between the flat glass layers so that the accuracy of target object detection based on light of a wavelength region to be incident is higher than the case based on light of another wavelength region.

For example, the ODDNN 11a optimized for light of the first wavelength region is arranged such that light of the first wavelength region is incident thereon. In a similar manner, the ODDNNs 11b to 11f optimized for light of the second wavelength region to the sixth wavelength region, respectively, are arranged such that light of the second wavelength region to the sixth wave length region is incident thereon, respectively. Therefore, in the ODDNNs 11a to 11f, it is possible to reduce the influence of crosstalk due to incidence of light of different wavelength regions, and further improve the accuracy of target object detection.

Then, in the neural network device 1, the ODDNNs 11a to 11f have received light of respective target objects mainly reflecting light of corresponding wavelength regions so as to preliminarily learn the light intensity distribution regions on the emission surfaces. Note that the learning result is stored in a ROM or a RAM of the control unit 13.

The same number of light receiving portions 12 as the ODDNNs 11 are provided, and are arranged to face the emission surfaces of the ODDNNs 11. That is, a light receiving portion 12a is arranged to face the emission surface of the ODDNN 11a. In a similar manner, light receiving portions 12b to 12f are arranged to face the emission surfaces of the ODDNN 11b to ODDNN 11f, respectively. The light emitted from the ODDNNs 11a to 11f is guided to the corresponding light receiving portions 12a to 12f.

The light receiving portion 12 is formed by a plurality of light receiving elements (for example, diodes) two-dimensionally arranged so as to receive light emitted from the emission surface of the ODDNN 11 in each predetermined range. Then, the light receiving portion 12 outputs a signal (a light receiving result) in accordance with the intensity of light received by each light receiving element to the control unit 13.

However, it is sufficient if the light receiving portion 12 has a resolution capable of detecting a target object on the basis of the light emitted from the emission surface of the ODDNN 11, and the light receiving portion 12 is formed by a significantly smaller number of light receiving elements than the number of pixels of the imaging element that captures images. Therefore, the light receiving portion 12 is able to operate with less energy than the imaging element.

The control unit 13 includes, for example, a microcomputer including a central processing unit (CPU), a read only memory (ROM), and a random access memory (RAM) and performs overall control of the neural network device 1. The control unit 13 functions as a sensor control unit 21 in the first embodiment.

The sensor control unit 21 detects a predetermined target object using the learning result of preliminary learning, on the basis of a signal input from the light receiving portion 12, that is, the light intensity distribution on the emission surface of the ODDNN 11.

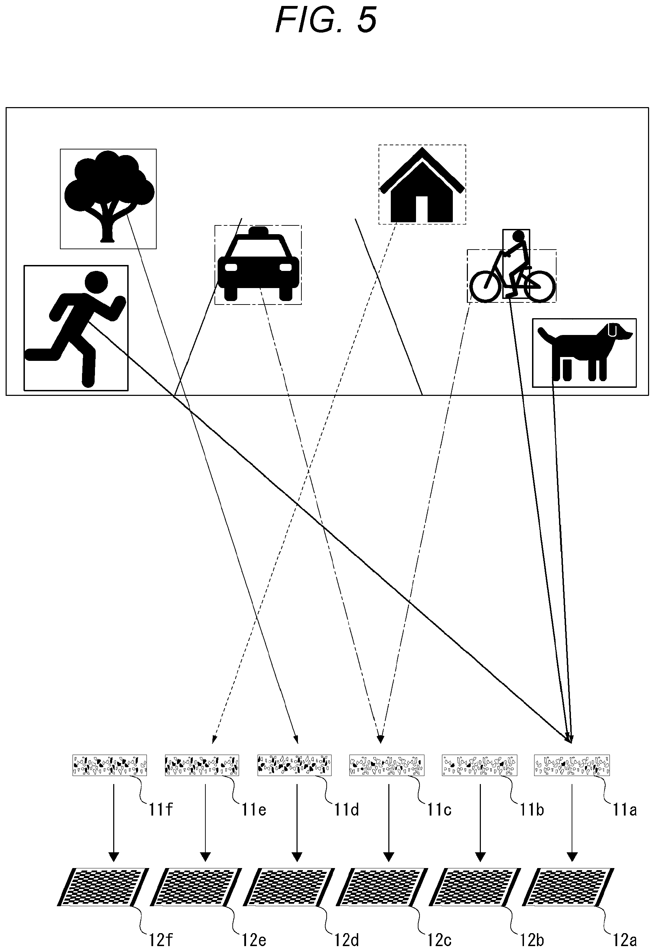

Fig. 5 is a diagram for explaining a specific example of target object detection. As illustrated in Fig. 5, it is assumed that a person, a tree, an automobile, a house, a dog, and a bicycle are set as the target objects. In such a case, for example, the person and the dog mainly reflect light of the first wavelength region. The automobile and the bicycle mainly reflect light of the third wavelength region. The tree mainly reflects light of the fourth wavelength region. The house mainly reflects light of the fifth wavelength region.

Therefore, for example, in a case where an automobile is a target object, the sensor control unit 21 detects an automobile on the basis of a signal input from the light receiving portion 12a corresponding to the ODDNN 11a optimized for light of the first wavelength region.

Furthermore, for example, in a case where a bicycle on which a person rides is a target object, the sensor control unit 21 detects a bicycle on the basis of a signal input from the light receiving portion 12c corresponding to the ODDNN 11c optimized for light of the third wavelength region. In addition, the sensor control unit 21 detects a person on the basis of a signal input from the light receiving portion 12a corresponding to the ODDNN 11a optimized for light of the first wavelength region. Then, the sensor control unit 21 determines a bicycle on which a person rides, on the basis of the detected positional relation between the bicycle and the person.

In this manner, the neural network device 1 is able to detect a target object on the basis of the intensity distribution of the light emitted from the emission surfaces of the ODDNNs 11 optimized for mutually different wavelength regions. Here, in the neural network device 1, light of a wavelength region for which an ODDNN 11 is optimized is made to enter the ODDNN 11. Thus, it is possible to reduce crosstalk with light of other wavelength regions and improve the accuracy of target object detection.

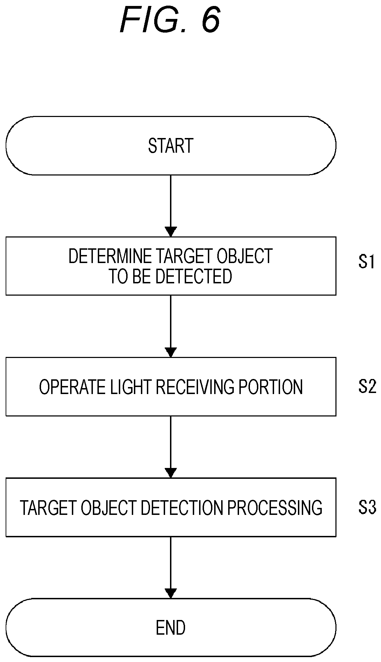

Fig. 6 is a flowchart showing a procedure of target object detection processing. As illustrated in Fig. 6, the sensor control unit 21 determines a target object to be detected at step S1. Here, a target object to be detected may be input by a user, or a predetermined target object to be detected may be determined. Furthermore, the number of target objects to be detected may be one or more.

Then, at step S2, the sensor control unit 21 starts the operation of the light receiving portion 12. Here, the sensor control unit 21 may operate only a light receiving portion 12 for detecting a target object to be detected among the plurality of light receiving portions 12a to 12f, and stop the other light receiving portions 12.

At the subsequent step S3, the control unit 13 performs target object detection processing of detecting a target object to be detected on the basis of a signal input from the light receiving portion 12. Here, it is determined whether a target object to be detected is detected using the learning result of preliminary learning, on the basis of the signal input from the light receiving portion 12, that is, the light intensity distribution on the emission surface of the ODDNN 11.

### <2. Second embodiment>

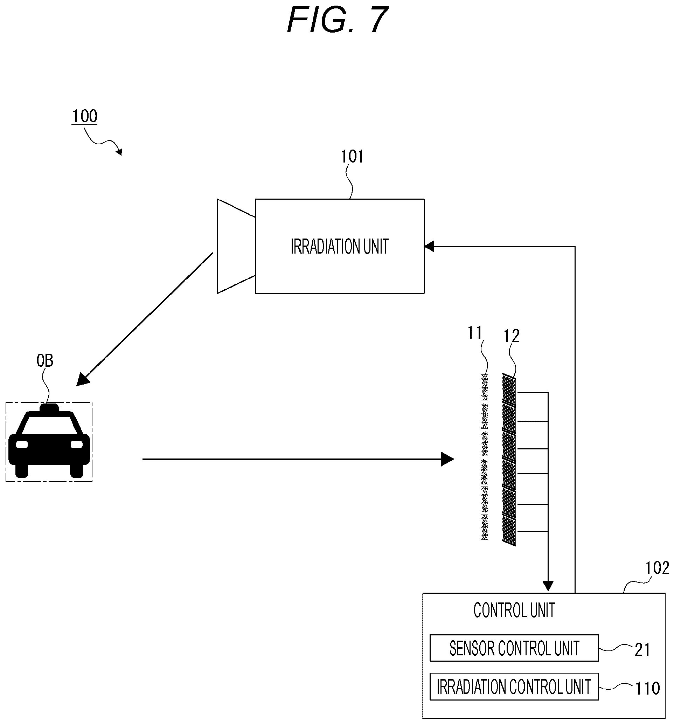

Fig. 7 is a diagram for explaining a configuration of a neural network device 100 as a second embodiment. Note that in the second embodiment, configurations different from those of the first embodiment will be described in detail, and the same configurations are denoted by the same reference signs, and the description thereof is omitted.

The neural network device 100 is a device that detects a target object using a plurality of ODDNNs 11 on the basis of light emitted from an irradiation unit 101 that is able to emit light of one or a plurality of wavelength regions and reflected by an object OB.

As illustrated in Fig. 7, the neural network device 100 includes the irradiation unit 101, an ODDNN 11, a light receiving portion 12, and a control unit 13.

The irradiation unit 101 is driven on the basis of the control by the control unit 13, and is able to switch and emit light of different wavelength regions (or wavelengths). Furthermore, the irradiation unit 101 is able to simultaneously emit light of a plurality of wavelength regions such as visible light.

When the light emitted from the irradiation unit 101 is reflected by an object OB, the reflected light is guided to the ODDNN 11.

In a manner similar to the first embodiment, the ODDNN 11 includes a plurality of ODDNNs (ODDNN 11a to 11f) and they are optimized for light of a plurality of wavelength regions that can be emitted by the irradiation unit 101.

In a manner similar to the first embodiment, the same number of light receiving portions 12 (light receiving portions 12a to 12f) as the ODDNNs 11 are provided, and are arranged to face the emission surfaces of the ODDNNs 11. The light emitted from each of the ODDNNs 11a to 11f is guided to the corresponding light receiving portions 12a to 12f. Then, the light receiving portion 12 outputs a signal in accordance with the intensity of light received by each light receiving element to the control unit 13.

The control unit 13 functions as a sensor control unit 21 and an irradiation control unit 110 in the second embodiment.

The irradiation control unit 110 causes the irradiation unit 101 to emit light of a predetermined wavelength region. The sensor control unit 21 detects a target object on the basis of a signal input from a light receiving portion 12 corresponding to an ODDNN 11 optimized for the wavelength region of the emitted light.

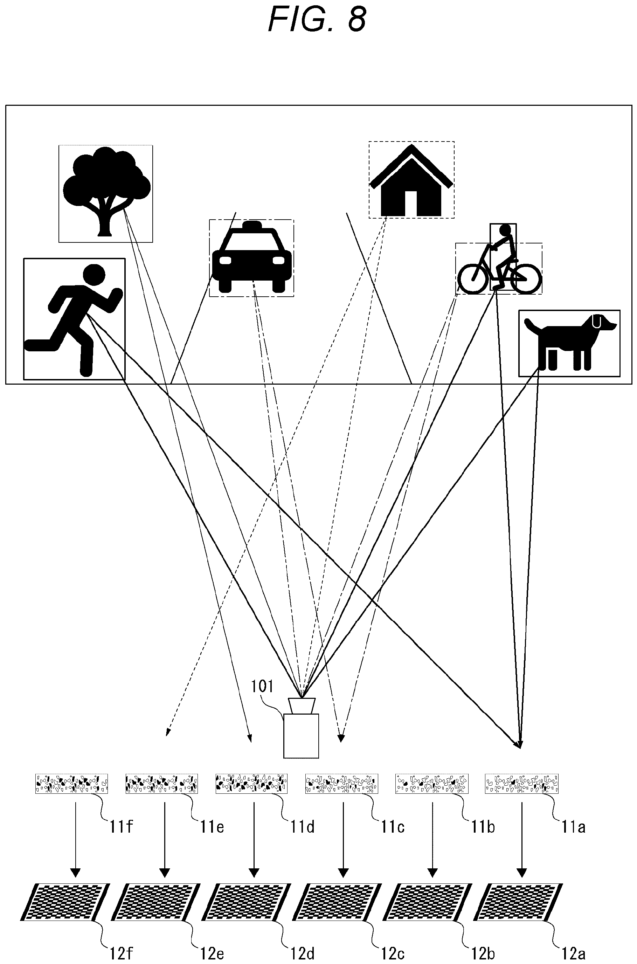

Fig. 8 is a diagram for explaining a specific example of target object detection. Note that in the example illustrated in Fig. 8, the same target objects as those in Fig. 5 are set. As illustrated in Fig. 8, in a case where an automobile is a target object, for example, the irradiation control unit 110 causes the irradiation unit 101 to emit light of the third wavelength region, and the sensor control unit 21 detects an automobile on the basis of a signal detected by the light receiving portion 12c corresponding to the ODDNN 11c optimized for light of the third wavelength region. Here, the light receiving portions 12 corresponding to the ODDNNs 11 optimized for light of other than the third wavelength region may be stopped.

In a case where a bicycle on which a person rides is a target object, the irradiation control unit 110 causes the irradiation unit 101 to emit light of the third wavelength region, and the sensor control unit 21 detects a bicycle on the basis of a signal input from the light receiving portion 12c corresponding to the ODDNN 11c optimized for light of the third wavelength region. Furthermore, the irradiation control unit 110 performs switching to cause the irradiation unit 101 to emit light of the first wavelength region, and the sensor control unit 21 detects a person on the basis of a signal input from the light receiving portion 12a corresponding to the ODDNN 11a optimized for light of the first wavelength region. Here, the sensor control unit 21 determines a bicycle on which a person rides, on the basis of the detected positional relation between the bicycle and the person.

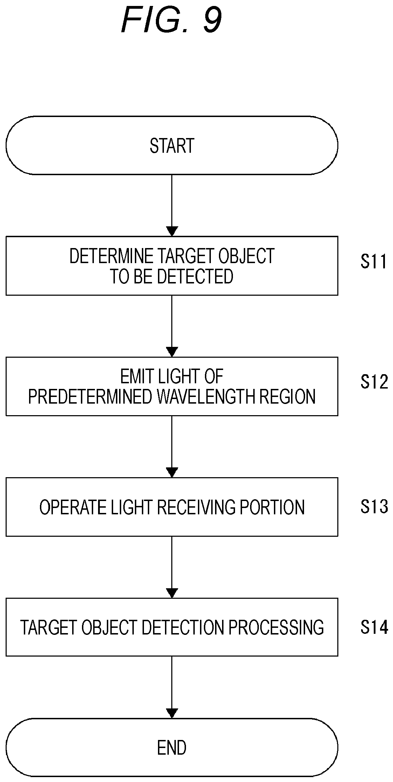

Fig. 9 is a flowchart showing a procedure of target object detection processing. As illustrated in Fig. 9, the sensor control unit 21 determines a target object to be detected at step S11. Here, a target object to be detected may be input by a user, or a predetermined target object to be detected may be determined.

Then, at step S12, the irradiation control unit 110 causes the irradiation unit 101 to emit light of a wavelength region that is mainly reflected by the target object to be detected. At step S13, the sensor control unit 21 operates at least the light receiving portion 12 corresponding to the ODDNN 11 optimized for light of the wavelength region emitted from the irradiation unit 101. At the subsequent step S14, the control unit 13 performs target object detection processing of detecting a target object to be detected on the basis of a signal detected by the light receiving portion 12. Note that, in a case where a target object is to be detected using light of a plurality of wavelength regions, after target object detection in one wavelength region is finished, steps S12 to S14 are performed for the other wavelength regions.

### <3. Application examples>

### [3-1. Application example 1]

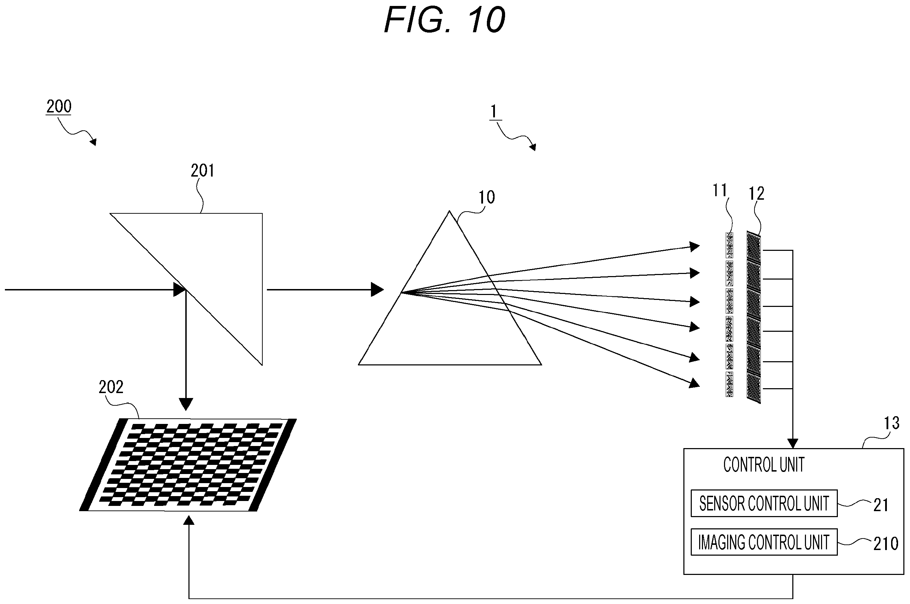

Fig. 10 is a diagram for explaining an imaging device 200. As an application example of the neural network device 1 according to the first embodiment, a case where it is applied to the imaging device 200 will be described. As illustrated in Fig. 10, the imaging device 200 includes a half mirror 201 and an imaging element 202, in addition to the neural network device 1.

In the imaging device 200, light from the outside enters the half mirror 201. The half mirror 201 transmits and reflects incident light at a certain rate, and guides the transmitted light to the spectroscopic portion 10 and guides the reflected light to the imaging element 202, for example.

The imaging element 202 is, for example, a charge coupled device (CCD) or complementary metal-oxide-semiconductor (CMOS) image sensor, and a plurality of pixels including photoelectric conversion elements is two-dimensionally arranged. The imaging element 202 captures an image of a predetermined imaging range through the half mirror 201 at certain intervals according to a frame rate to generate image data. Note that the image captured by the imaging element 202 may be either a still image or a moving image, or may be an image captured by interval imaging, or the like.

The control unit 13 functions as a sensor control unit 21 and an imaging control unit 210 in the application example 1.

The imaging control unit 210 causes the imaging element 202 to start imaging with detection of a predetermined target object (an automobile, for example) as a trigger.

Furthermore, the sensor control unit 21 detects and sets, as a region of interest (ROI), a range in which the target object has been detected on the basis of the signal input from the light receiving portion 12. Then, the imaging control unit 210 causes the imaging element 202 to perform an imaging operation targeting only the ROI.

Here, in the ODDNN 11, as described above, it is possible to detect a target object on the basis of the light intensity distribution on the emission surface. Furthermore, in the ODDNN 11, it is possible to detect an approximate position of a target object on the basis of the light intensity distribution on the emission surface. Therefore, in the imaging device 200, light of each of the target objects at different positions is made to enter the ODDNN 11 so as to preliminarily learn the light intensity distribution on the emission surface. Note that the learning result is stored in a ROM or a RAM of the control unit 13. Then, the sensor control unit 21 detects an ROI of the target object on the basis of the signal input from the light receiving portion 12 and the learning result.

Thereafter, in a case where the target object is imaged by the imaging element 202, the imaging control unit 210 performs predetermined image analysis on the target object and calculates an ROI of the target object. Then, even at and after the next frame, the imaging control unit 210 performs image analysis on the captured image of the ROI calculated in the previous frame, performs target object recognition processing, and calculates an ROI for the recognized target object. Note that a known analysis method can be used for the image analysis for calculating an ROI, and thus the description thereof is omitted here.

With such a method, imaging by the imaging element 202 is started with detection of a target object as a trigger. Thus, only the light receiving portion 12 consuming lower power than the imaging element 202 needs to be operated until the target object is detected, which saves energy.

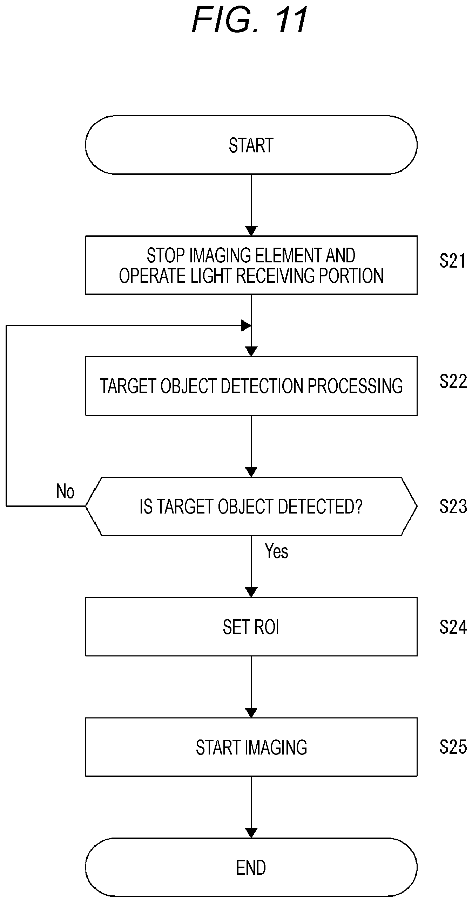

Fig. 11 is a flowchart showing a procedure of imaging processing. As illustrated in Fig. 11, at step S21, the imaging control unit 210 stops the imaging element 202, and the sensor control unit 21 starts operation of the light receiving portion 12. At the subsequent step S22, the sensor control unit 21 performs target object detection processing of detecting a target object on the basis of a signal input from the light receiving portion 12.

Then, at step S23, the sensor control unit 21 determines whether the predetermined target object is detected at step S22. If the predetermined target object is not detected (No at step S23), the sensor control unit 21 repeats the processing of steps S22 and S23.

Meanwhile, if the predetermined target object is detected (Yes at step S23), at step S24, the control unit 13 sets, as an ROI, a range in which the predetermined target object has been detected on the basis of the signal input from the light receiving portion 12.

Thereafter, at step S25, the control unit 13 causes the imaging element 202 to start imaging targeting only the ROI set at step S24.

### [3-2. Application example 2]

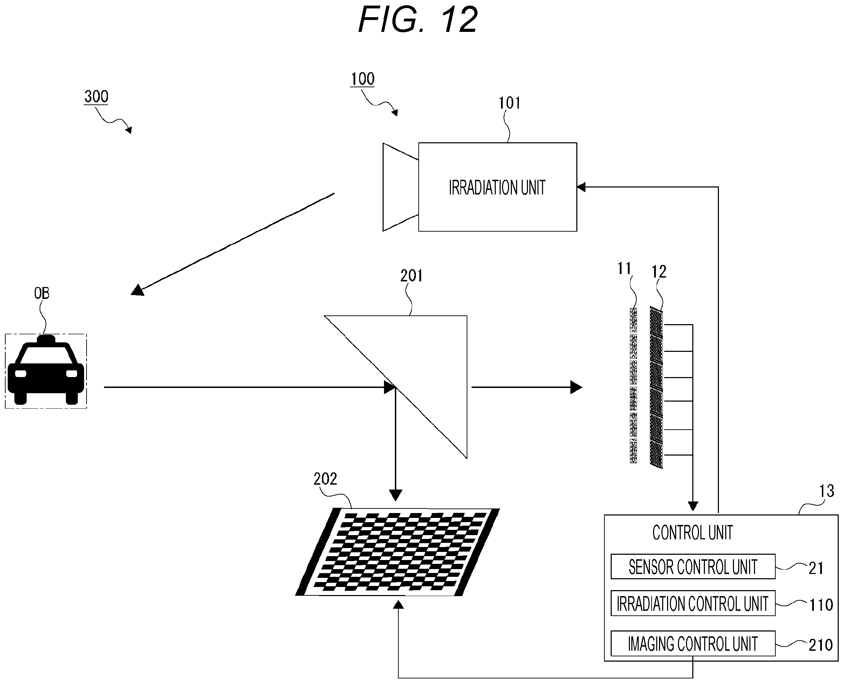

Fig. 12 is a diagram for explaining an imaging device 300. As an application example of the neural network device 100 according to the second embodiment, a case where it is applied to the imaging device 300 will be described. As illustrated in Fig. 12, the imaging device 300 includes a half mirror 201 and an imaging element 202, in addition to the neural network device 100.

In the imaging device 300, the light emitted from the irradiation unit 101 and reflected by an object OB enters the half mirror 201. The half mirror 201 transmits and reflects incident light at a certain rate, and guides the transmitted light to the ODDNN 11 and guides the reflected light to the imaging element 202, for example.

The imaging element 202 is, for example, a CCD or CMOS image sensor, and a plurality of pixels including photoelectric conversion elements is two-dimensionally arranged. The imaging element 202 captures an image of a predetermined imaging range through the half mirror 201 at certain intervals according to a frame rate to generate image data. Note that the image captured by the imaging element 202 may be either a still image or a moving image, or may be an image captured by interval imaging, or the like.

The control unit 13 functions as a sensor control unit 21, an irradiation control unit 110, and an imaging control unit 210 in the application example 2.

The irradiation control unit 110 causes the irradiation unit 101 to emit light of a predetermined wavelength region. The sensor control unit 21 detects a target object on the basis of a signal input from a light receiving portion 12 corresponding to an ODDNN 11 optimized for the wavelength region of the emitted light.

The imaging control unit 210 causes the imaging element 202 to start imaging with detection of the predetermined target object as a trigger.

Furthermore, the sensor control unit 21 detects and sets, as a region of interest (ROI), a range in which the predetermined target object has been detected on the basis of the signal input from the light receiving portion 12. Then, the imaging control unit 210 causes the imaging element 202 to perform an imaging operation targeting only the ROI.

Thereafter, in a case where the target object is imaged by the imaging element 202, the imaging control unit 210 performs predetermined image analysis on the target object and calculates an ROI of the target object. Then, even at and after the next frame, the imaging control unit 210 performs image analysis on the captured image of the ROI calculated in the previous frame, performs target object recognition processing, and calculates an ROI for the recognized target object. Note that a known analysis method can be used for the image analysis for calculating an ROI, and thus the description thereof is omitted here.

With such a method, imaging by the imaging element 202 is started with detection of a predetermined target object as a trigger, in a manner similar to the application example 1. Thus, only the light receiving portion 12 consuming lower power than the imaging element 202 needs to be operated until the target object is detected, which saves energy.

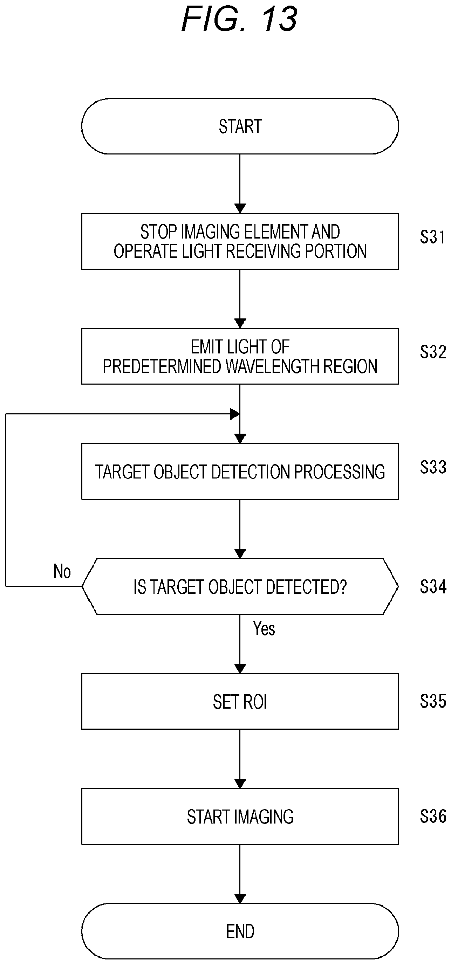

Fig. 13 is a flowchart showing a procedure of imaging processing. As illustrated in Fig. 13, at step S31, the imaging control unit 210 stops the imaging element 202, and the sensor control unit 21 starts operation of the light receiving portion 12.

Subsequently, at step S32, the irradiation control unit 110 causes the irradiation unit 101 to emit light of a wavelength region that is mainly reflected by a target object to be detected. Then, at step S33, the sensor control unit 21 performs target object detection processing of detecting a target object on the basis of a signal input from the light receiving portion 12.

Then, at step S34, the sensor control unit 21 determines whether a target object is detected at step S22. Here, it is determined whether a predetermined target object is detected using the learning result of preliminary learning, on the basis of the signal input from the light receiving portion 12, that is, the light intensity distribution on the emission surface of the ODDNN 11.

Then, if the predetermined target object is not detected (No at step S34), the sensor control unit 21 repeats the processing of steps S33 and S34.

Meanwhile, if the predetermined target object is detected (Yes at step S34), at step S35, the control unit 13 sets, as an ROI, a range in which the predetermined target object has been detected on the basis of the signal input from the light receiving portion 12.

Thereafter, at step S36, the control unit 13 causes the imaging element 202 to start imaging targeting only the ROI set at step S24.

### <4. Other configuration examples of neural network device>

Note that the embodiments are not limited to the specific examples described above and may be configured as various modifications.

In the above-described first embodiment, the spectroscopic portion 10 that disperses light is provided as a light guide unit that guides light of an optimized wavelength region to the ODDNN 11. Furthermore, in the above-described second embodiment, the irradiation unit 101 that is able to emit light of a predetermined wavelength region is provided as a light guide unit that guides light of an optimized wavelength region to the ODDNN 11. However, the light guide unit may be other than the spectroscopic portion 10 and the irradiation unit 101 as long as the light of an optimized wavelength region can be guided to the ODDNN 11.

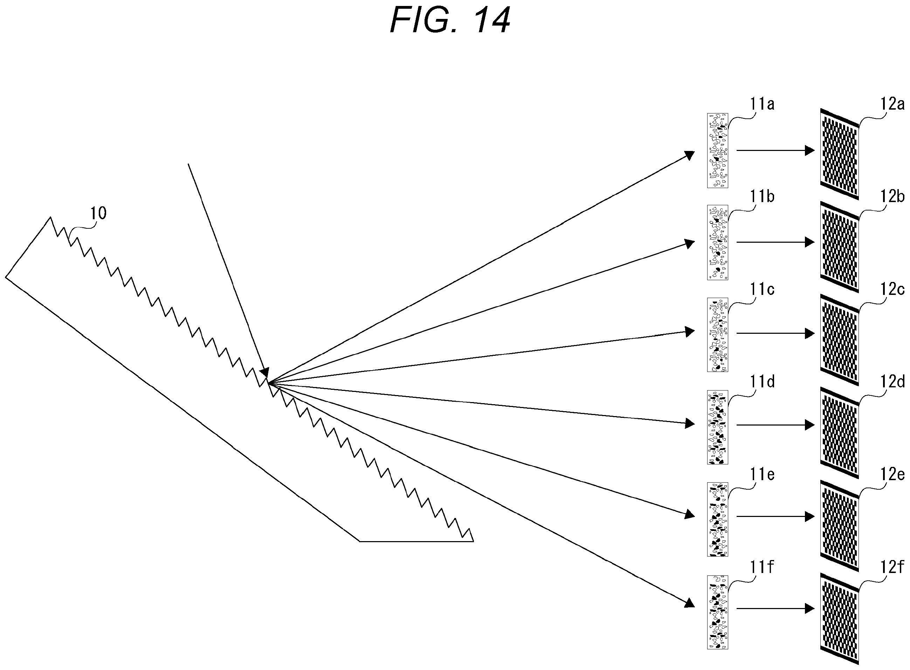

In the above-described first embodiment, a prism is applied as the spectroscopic portion 10. However, the spectroscopic portion 10 is not limited to a prism as long as light can be dispersed. For example, as illustrated in Fig. 14, the spectroscopic portion 10 may be a diffraction grating (grating) that disperses light.

In the above-described first and second embodiments and application examples, a plurality of ODDNNs 11 optimized for different wavelength regions is provided. However, only one ODDNN 11 optimized for any one of the wavelength regions may be provided. In this case, only one light receiving portion 12 may be provided.

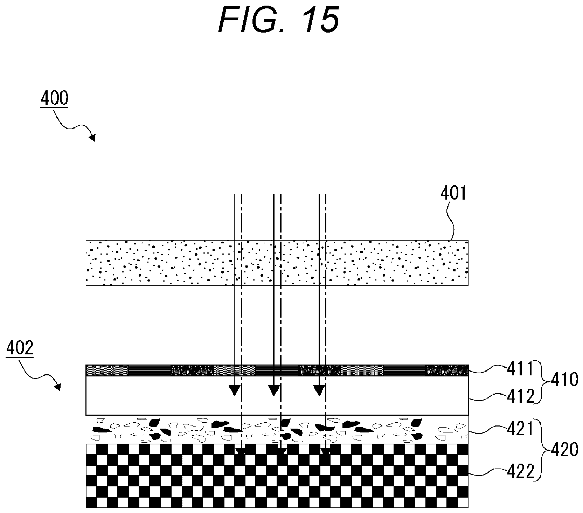

In the above-described application examples, the light receiving portion 12 and the imaging element 202 are provided as separate bodies. However, the light receiving portion 12 and the imaging element 202 may be stacked. For example, as illustrated in Fig. 15, an imaging detecting portion 400 includes a dual-bandpass filter 401 and an imaging detection element 402. The dual-bandpass filter 401 is, for example, a filter that transmits visible light and infrared light and cuts light of other wavelength regions.

Light that has passed through the dual-bandpass filter 401 enters the imaging detection element 402. The imaging detection element 402 is packaged (integrated) with an imaging element part 410 and an ODDNN part 420 stacked on each other.

The imaging element part 410 includes, for example, color filters 411 arranged in a Bayer array and imaging elements (diodes) 412 corresponding to the color filters 411. Therefore, the imaging element part 410 is able to capture a full-color image on the basis of visible light out of visible light and infrared light having passed through the dual-bandpass filter 401. Furthermore, the imaging element part 410 transmits infrared light out of visible light and infrared light having passed through the dual-bandpass filter 401.

The ODDNN part 420 includes an ODDNN 421 and a light receiving portion 422. The ODDNN 421 is optimized for infrared light, and is configured to be able to detect a target object on the basis of infrared light entering through the imaging element part 410. The light receiving portion 422 is arranged to face the emission surface of the ODDNN 421, and outputs a signal in accordance with the intensity of the light emitted from the emission surface of the ODDNN 421 to the control unit 13.

Such a configuration enables downsizing of the neural network device 1, 100.

Furthermore, an artificial neural network (ANN) may be executed using light emitted from the emission surface of the ODDNN 11. Examples of the ANN include a known deep neural network (DNN), a convolutional neural network (CNN), a recurrent neural network (RNN), a spiking neural network (SNN), and the like.

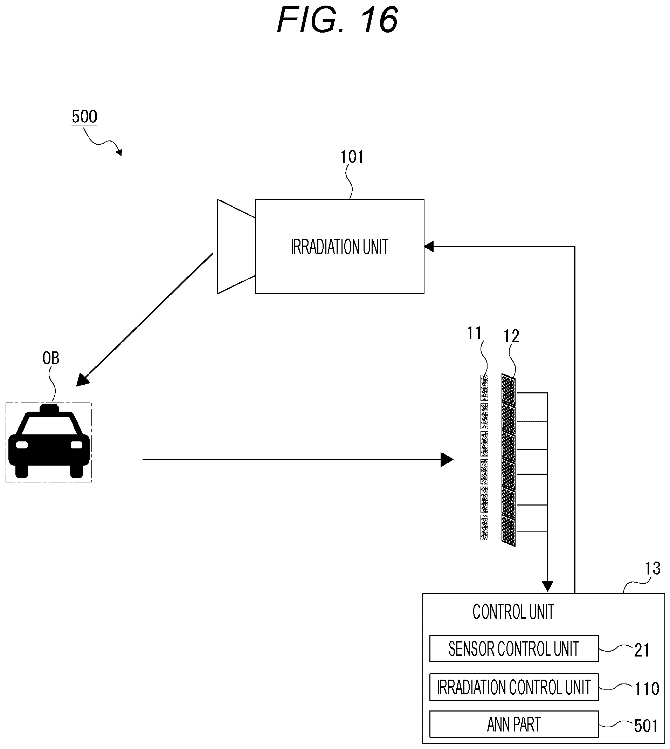

For example, as illustrated in Fig. 16, a neural network device 500 includes an irradiation unit 101, an ODDNN 11, a light receiving portion 12, and a control unit 13. Note that the irradiation unit 101, the ODDNN 11, and the light receiving portion 12 are similar to those in the second embodiment, and thus the description thereof will be omitted.

The control unit 13 functions as a sensor control unit 21, an irradiation control unit 110, and an ANN part 501. The ANN part 501 executes the ANN on the basis of a signal input from the light receiving portion 12, that is, the intensity distribution of light emitted from the emission surface of the ODDNN 11.

The neural network device 500 having such a configuration first performs target object detection processing using the ODDNN 11, in a manner similar to the second embodiment. For example, in the target object detection processing using the ODDNN 11, a general target object is detected. Specifically, a vehicle including an automobile, a truck, a motorcycle, and a bicycle is detected.

Then, the ANN part 501 executes the ANN on the basis of the intensity distribution of light emitted from the emission surface of the ODDNN 11 to detect a detailed target object. The ANN part 501 performs detection for distinguishing, for example, an automobile, a truck, a motorcycle, a bicycle, and the like.

Therefore, the neural network device 500 is able to reduce the processing load and the power consumption by the ANN and perform target object detection at high speed and with low consumption.

### <5. Summary of embodiments>

As described above, the neural network device 1, 100 according to the embodiments includes one or a plurality of optical diffractive deep neural networks (ODDNN 11) each optimized for light of a predetermined wavelength region, a light guide unit (spectroscopic portion 10, irradiation unit 101) that guides light of an optimized wavelength region to the optical diffractive deep neural network, the light receiving portion 12 that receives light output from the optical diffractive deep neural network, and the control unit 13 that detects a target object on the basis of a signal corresponding to the light received by the light receiving portion 12.

Therefore, in the neural network device 1, 100, light of a wavelength region optimized for the ODDNN 11 is made to enter the ODDNN 11. Thus, it is possible to reduce crosstalk with light of other wavelength regions.

As a result, the neural network device 1, 100 is able to improve the accuracy of target object detection. Furthermore, the neural network device 1, 100 is able to achieve high-speed processing and save energy. In addition, in the neural network device 1, private information is not included in the light emitted from the ODDNN 11, which can protect privacy.

Furthermore, a plurality of optical diffractive deep neural networks (ODDNNs 11) is provided and optimized for light of mutually different wavelength regions.

Therefore, even in a case where a target object mainly reflecting a different wavelength region is present, the neural network device 1, 100 is able to accurately detect a target object using the ODDNN 11 corresponding to each wavelength region.

Furthermore, the light guide unit is the spectroscopic portion 10 that disperses light.

Therefore, the neural network device 1 is able to guide the light of an optimized wavelength region to the ODDNN 11 with a simple configuration and without consuming power.

Furthermore, the spectroscopic portion 10 guides light of an optimized wavelength among the dispersed light to the optical diffractive deep neural network (ODDNN 11).

Therefore, the neural network device 1 is able to guide the light of an optimized wavelength region to the ODDNN 11 with a simple configuration and without consuming power.

As a result, the neural network device 1 is able to improve the accuracy of target object detection.

Furthermore, the optical diffractive deep neural network (ODDNN 11) is optimized for light of a wavelength region mainly reflected by a target object. The light receiving portion 12 receives light emitted from the optical diffractive deep neural network (ODDNN 11) optimized for light of the wavelength region mainly reflected by the target object, and the control unit 13 detects the target object on the basis of a signal input from the light receiving portion 12 that has received light emitted from the optical diffractive deep neural network (ODDNN 11) optimized for light of the wavelength region mainly reflected by the target object.

Therefore, the neural network device 1 is able to improve the accuracy of target object detection using the ODDNN 11 optimized for light of the wavelength region mainly reflected by the target object.

Furthermore, the spectroscopic portion 10 is a prism.

Therefore, the neural network device 1 is able to disperse light and guide the light to the ODDNN 11 with a simple configuration.

Furthermore, the spectroscopic portion 10 is a diffraction grating.

Therefore, the neural network device 1 is able to disperse light and guide the light to the ODDNN 11 with a simple configuration.

The light guide unit is the irradiation unit 101 that is able to emit light of a predetermined wavelength region.

Therefore, the neural network device 100 is able to improve the accuracy of the wavelength region of light guided to the ODDNN 11, and improve the accuracy of target object detection.

Furthermore, the irradiation unit 101 is able to emit light of a plurality of wavelengths, and the optical diffractive deep neural network (ODDNN 11) is optimized for each of the plurality of wavelengths that can be emitted by the irradiation unit 101.

Therefore, even in a case where a target object mainly reflecting a different wavelength region is present, the neural network device 100 is able to accurately detect the target object using the ODDNN 11 corresponding to each wavelength region.

Furthermore, the optical diffractive deep neural network (ODDNN 11) is optimized for light of a wavelength region mainly reflected by a target object. The irradiation unit 101 emits light of the wavelength region mainly reflected by the target object, and the control unit 13 detects the target object on the basis of a signal input from the light receiving portion 12 that has received light emitted from the optical diffractive deep neural network (ODDNN 11) optimized for light of the wavelength region mainly reflected by the target object.

Therefore, the neural network device 100 is able to improve the accuracy of target object detection using the ODDNN 11 optimized for light of the wavelength region mainly reflected by the target object.

Furthermore, there is provided the imaging control unit 210 that controls the imaging element 202 to start imaging with detection of a target object as a trigger.

Therefore, it is possible to stop the imaging element 202 until a target object is detected, which saves energy.

Furthermore, an imaging element (imaging element part 410) and a diffractive deep neural network (ODDNN part 420) may be stacked.

This achieves space saving and downsizing.

Furthermore, the imaging element (imaging element part 410) receives visible light, and the optical diffractive deep neural network (ODDNN part 420) receives infrared light having passed through the imaging element.

Therefore, it is possible to capture an image and detect a target object in different wavelength regions, which achieves space saving and downsizing.

In the above-described detection method according to the present technology, light of an optimized wavelength is guided to one or a plurality of optical diffractive deep neural networks each optimized for light of a different wavelength region, and the light receiving portion is caused to receive light output from the optical diffractive deep neural network, so as to detect a target object on the basis of a signal corresponding to the light received by the light receiving portion.

In the above-described program according to the present technology, the neural network device is caused to perform processing of guiding light of an optimized wavelength to one or a plurality of optical diffractive deep neural networks each optimized for light of a different wavelength region, and causing a light receiving portion to receive light output from the optical diffractive deep neural network, and detecting a target object on the basis of a signal corresponding to the light received by the light receiving portion.

Such a program may be recorded in advance in an HDD as a recording medium built in a device such as a computer device, a ROM in a microcomputer having a CPU, or the like.

Alternatively, the program can be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, a memory card, or the like. Such a removable recording medium can be provided as what is called package software.

Furthermore, such a program may be installed from the removable recording medium into a personal computer or the like, or may be downloaded from a download site over a network such as a local area network (LAN), the Internet, or the like.

Furthermore, such a program is suitable for providing the neural network device according to the embodiments in a wide range. For example, downloading the program to a mobile terminal device such as a smartphone or a tablet, a mobile phone, a personal computer, a video game console, a video device, a personal digital assistant (PDA), or the like allows such a device to function as the neural network device of the present technology.

Note that the effects described in the present specification are merely examples and are not limited, and other effects may be provided.

### <6. Present technology>

The present technology may also adopt the following configurations.
(1) A neural network device, including:
   one or a plurality of optical diffractive deep neural networks each optimized for light of a predetermined wavelength region;
   a light guide unit that guides light of an optimized wavelength region to the optical diffractive deep neural network;
   a light receiving portion that receives light output from the optical diffractive deep neural network; and
   a control unit that detects a target object on the basis of a signal corresponding to the light received by the light receiving portion.
(2) The neural network device according to (1), in which
   the optical diffractive deep neural network includes a plurality of the optical diffractive deep neural networks that is optimized for light of mutually different wavelength regions.
(3) The neural network device according to (1) or (2), in which
   the light guide unit is a spectroscopic portion that disperses light.
(4) The neural network device according to (3), in which
   the spectroscopic portion
   guides light of an optimized wavelength among the dispersed light to the optical diffractive deep neural network.
(5) The neural network device according to (3) or (4), in which
   the optical diffractive deep neural network is optimized for light of a wavelength region mainly reflected by the target object,
   the light receiving portion receives light emitted from the optical diffractive deep neural network optimized for light of the wavelength region mainly reflected by the target object, and
   the control unit detects the target object on the basis of a signal input from the light receiving portion that has received light emitted from the optical diffractive deep neural network optimized for light of the wavelength region mainly reflected by the target object.
(6) The neural network device according to any one of (3) to (5), in which
   the spectroscopic portion is a prism.
(7) The neural network device according to any one of (3) to (5), in which
   the spectroscopic portion is a diffraction grating.
(8) The neural network device according to (1) or (2), in which
   the light guide unit is an irradiation unit that is able to emit light of a predetermined wavelength region.
(9) The neural network device according to (8), in which
   the irradiation unit is configured to emit light of a plurality of wavelengths, and
   the optical diffractive deep neural network is optimized for each of the plurality of wavelength regions that are able to be emitted by the irradiation unit.
(10) The neural network device according to (9), in which
   the optical diffractive deep neural network is optimized for light of a wavelength region mainly reflected by the target object,
   the irradiation unit emits light of a wavelength region mainly reflected by a target object to be detected, and
   the control unit detects the target object on the basis of a signal input from the light receiving portion that has received light emitted from the optical diffractive deep neural network optimized for light of the wavelength region mainly reflected by the target object.
(11) The neural network device according to any one of (1) to (10), including
   an imaging control unit that controls an imaging element to start imaging with detection of the target object as a trigger.
(12) The neural network device according to (11), in which
   the imaging element and the optical diffractive deep neural network are stacked.
(13) The neural network device according to (11) or (12), in which
   the imaging element receives visible light, and
   the optical diffractive deep neural network receives infrared light having passed through the imaging element.
(14) A detection method, including:
   guiding light of an optimized wavelength to one or a plurality of optical diffractive deep neural networks each optimized for light of a different wavelength region;
   causing a light receiving portion to receive light output from the optical diffractive deep neural network; and
   detecting a target object on the basis of a signal corresponding to the light received by the light receiving portion.
(15) A program causing a neural network device to perform processing of:
   guiding light of an optimized wavelength to one or a plurality of optical diffractive deep neural networks each optimized for light of a different wavelength region;
   causing a light receiving portion to receive light output from the optical diffractive deep neural network; and
   detecting a target object on the basis of a signal corresponding to the light received by the light receiving portion.

### REFERENCE SIGNS LIST

- 1: Neural network device
- 10: Spectroscopic portion
- 11: ODDNN
- 12: Light receiving portion
- 13: Control unit
- 100: Neural network device
- 101: Irradiation unit
- 202: Imaging element

## Claims

1. A neural network device, comprising:
one or a plurality of optical diffractive deep neural networks each optimized for light of a predetermined wavelength region;
a light guide unit that guides light of an optimized wavelength region to the optical diffractive deep neural network;
a light receiving portion that receives light output from the optical diffractive deep neural network; and
a control unit that detects a target object on a basis of a signal corresponding to the light received by the light receiving portion.

2. The neural network device according to claim 1, wherein
the optical diffractive deep neural network includes a plurality of the optical diffractive deep neural networks that is optimized for light of mutually different wavelength regions.

3. The neural network device according to claim 1, wherein
the light guide unit is a spectroscopic portion that disperses light.

4. The neural network device according to claim 3, wherein
the spectroscopic portion
guides light of an optimized wavelength among the dispersed light to the optical diffractive deep neural network.

5. The neural network device according to claim 3, wherein
the optical diffractive deep neural network is optimized for light of a wavelength region mainly reflected by the target object,
the light receiving portion receives light emitted from the optical diffractive deep neural network optimized for light of the wavelength region mainly reflected by the target object, and
the control unit detects the target object on a basis of a signal input from the light receiving portion that has received light emitted from the optical diffractive deep neural network optimized for light of the wavelength region mainly reflected by the target object.

6. The neural network device according to claim 3, wherein
the spectroscopic portion is a prism.

7. The neural network device according to claim 3, wherein
the spectroscopic portion is a diffraction grating.

8. The neural network device according to claim 1, wherein
the light guide unit is an irradiation unit that is able to emit light of a predetermined wavelength region.

9. The neural network device according to claim 8, wherein
the irradiation unit is able to emit light of a plurality of wavelengths, and
the optical diffractive deep neural network is optimized for each of the plurality of wavelength regions that is able to be emitted by the irradiation unit.

10. The neural network device according to claim 9, wherein
the optical diffractive deep neural network is optimized for light of a wavelength region mainly reflected by the target object,
the irradiation unit emits light of a wavelength region mainly reflected by a target object to be detected, and
the control unit detects the target object on a basis of a signal input from the light receiving portion that has received light emitted from the optical diffractive deep neural network optimized for light of the wavelength region mainly reflected by the target object.

11. The neural network device according to claim 1, comprising
an imaging control unit that controls an imaging element to start imaging with detection of the target object as a trigger.

12. The neural network device according to claim 11, wherein
the imaging element and the optical diffractive deep neural network are stacked.

13. The neural network device according to claim 11, wherein
the imaging element receives visible light, and
the optical diffractive deep neural network receives infrared light having passed through the imaging element.

14. A detection method, comprising:
guiding light of an optimized wavelength to one or a plurality of optical diffractive deep neural networks each optimized for light of a different wavelength region;
causing a light receiving portion to receive light output from the optical diffractive deep neural network; and
detecting a target object on a basis of a signal corresponding to the light received by the light receiving portion.

15. A program causing a neural network device to perform processing of:
guiding light of an optimized wavelength to one or a plurality of optical diffractive deep neural networks each optimized for light of a different wavelength region; and
causing a light receiving portion to receive light output from the optical diffractive deep neural network; and
detecting a target object on a basis of a signal corresponding to the light received by the light receiving portion.
